# EUROPEAN PATENT APPLICATION

(11) **EP 4 593 148 A1**
(43) Date of publication of application: **30.07.2025**
(21) Application number: 24767382.5
(22) Date of filing: 05.03.2024
(51) Int. Cl.: H01M 10/0567, H01M 4/38, H01M 4/525, H01M 10/052

(54) **NON-AQUEOUS ELECTROLYTE AND LITHIUM SECONDARY BATTERY COMPRISING SAME**

(30) Priority: 07.03.2023 KR 20230030216
(71) Applicant: LG Energy Solution, Ltd., Seoul 07335 (KR)
(72) Inventor: CHO, Yoon Gyo, Daejeon 34122 (KR); LEE, Jung Min, Daejeon 34122 (KR); LEE, Chul Haeng, Daejeon 34122 (KR); LEE, Kyung Mi, Daejeon 34122 (KR); BAEK, Ga Young, Daejeon 34122 (KR); JI, Su Hyeon, Daejeon 34122 (KR); YEOM, Chul Eun, Daejeon 34122 (KR)
(74) Representative: Hoffmann Eitle
(86) International application number: PCT/KR2024/002782
(87) International publication number: WO 2024/186094

(57) **Abstract**

A lithium secondary battery includes: a negative electrode including a silicon-based negative electrode active material; a positive electrode; a separator; and a non-aqueous electrolyte. The non-aqueous electrolyte contains: a lithium salt; an organic solvent; a compound of Formula 1 as a first additive; and a compound of Formula 2 as a second additive.

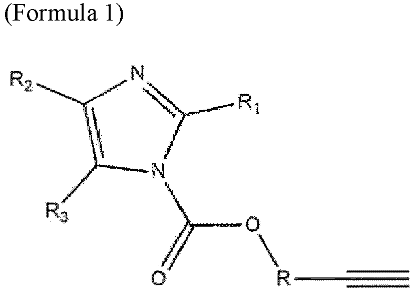

Here, R is an alkylene group with 1 to 5 carbon atoms, which may be substituted with fluorine, and R₁ to R₃ are each independently any one selected from the group consisting of H, an alkyl group with 1 to 5 carbon atoms, and a nitrile group.

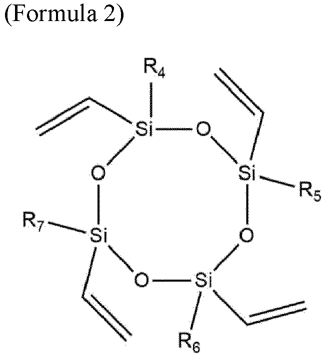

Here, R₄ to R₇ are each independently any one selected from the group consisting of an alkyl group with 1 to 10 carbon atoms, which may be substituted with fluorine, and an alkenyl group with 2 to 10 carbon atoms, which may be substituted with fluorine.

## Description

### TECHNICAL FIELD

### [CROSS-REFERENCE TO RELATED APPLICATIONS]

This application is based on and claims priority from Korean Patent Application No. 10-2023-0030216, filed on March 7, 2023, with the Korean Intellectual Property Office, the disclosure of which is incorporated herein in its entirety by reference.

### [TECHNICAL FIELD]

The present disclosure relates to a non-aqueous electrolyte and a lithium secondary battery including the same.

### BACKGROUND ART

Recently, the applications of lithium secondary batteries have rapidly expanded from the supply of power for electricity, electronics, communication, and electronic devices such as computers, to the storage and supply of power for large-sized devices such as automobiles and energy storage systems. Consequently, there is an increasing demand for secondary batteries with a high capacity, high power, and high stability.

Especially, in lithium secondary batteries for automobiles, the high-capacity, high-power, and long-life characteristics are gaining importance. In order to implement the high capacity of secondary batteries, a silicon-based negative electrode active material having a high energy density but a low stability may be used.

### DISCLOSURE OF THE INVENTION

### TECHNICAL PROBLEM

As a result of conducting multifaceted research to solve the above problems, the present invention provides a lithium secondary battery having improved long-life characteristics, high-temperature storage characteristics, and thermal stability by including a non-aqueous electrolyte capable of forming a stable SEI (Solid Electrolyte Interphase) film on an anode with extreme volume change in a lithium secondary battery including an anode using a silicon-based anode active material with low stability, thereby improving overall performance.

### TECHNICAL SOLUTION

To achieve the above purpose, an embodiment of the present disclosure provides a lithium secondary battery including: a negative electrode including a silicon-based negative electrode active material; a positive electrode; a separator; and a non-aqueous electrolyte. The non-aqueous electrolyte contains: a lithium salt; an organic solvent; a compound of Formula 1 below as a first additive; and a compound of Formula 2 below as a second additive.

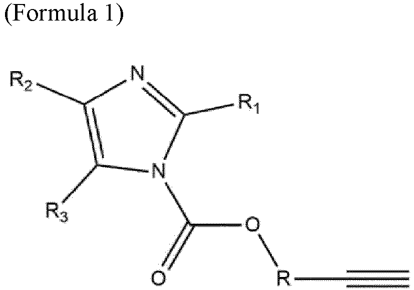

In Formula 1 above, R is an alkylene group with 1 to 5 carbon atoms, which may be substituted with fluorine, and R₁ to R₃ are each independently any one selected from the group consisting of H, an alkyl group with 1 to 5 carbon atoms, and a nitrile group.

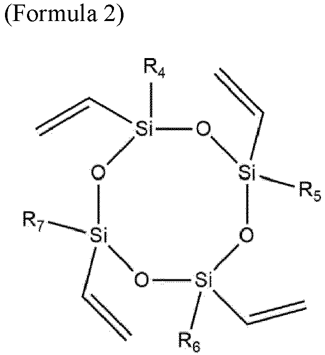

In Formula 2 above, R₄ to R₇ are each independently any one selected from the group consisting of an alkyl group with 1 to 10 carbon atoms, which may be substituted with fluorine, and an alkenyl group with 2 to 10 carbon atoms, which may be substituted with fluorine.

Another embodiment of the present disclosure provides a non-aqueous electrolyte including: a lithium salt; an organic solvent; a compound of Formula 1 below as a first additive; and a compound of Formula 2 below as a second additive.

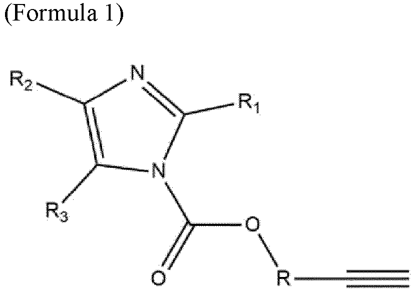

In Formula 1 above, R is an alkylene group with 1 to 5 carbon atoms, which may be substituted with fluorine, and R₁ to R₃ are each independently any one selected from the group consisting of H, an alkyl group with 1 to 5 carbon atoms, and a nitrile group.

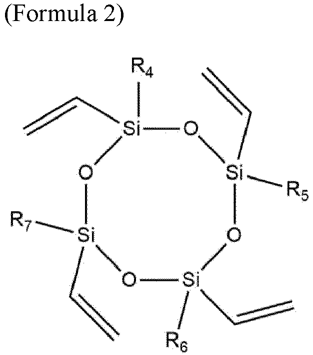

In Formula 2 above, R₄ to R₇ are each independently any one selected from the group consisting of an alkyl group with 1 to 10 carbon atoms, which may be substituted with fluorine, and an alkenyl group with 2 to 10 carbon atoms, which may be substituted with fluorine.

### ADVANTAGEOUS EFFECTS

The compound of Formula 1 used as the first additive of the present invention may form a polyethylene-oxide-based polymeric SEI layer with a high elasticity during reduction, and the compound of Formula 2 used as the second additive of the present invention may form an SEI layer with a polysiloxane structure exhibiting a high shear modulus of elasticity (e.g., the degree of ability to resist shear stress) during reduction.

In particular, the first additive includes a propargyl group, and the second additive includes a tetravinyl group. The presence of the additives enables the formation of a more robust polymeric film. Further, the second additive has a cyclic siloxane structure, which may facilitate the reduction reaction as compared to an additive having a linear siloxane structure. Furthermore, the lone electron pairs of imidazole present in the structure of the first additive accelerate a ring opening reaction of the second additive, so that the polymeric film may be easily formed. That is, the combination of the first and second additives provides a synergy effect, which may significantly improve the durability of the film formed on the negative electrode.

As a result of the synergy effect achieved by the interaction of the first and second additives, the present disclosure may form a highly stable and durable electrode-electrolyte interface even in the lithium secondary battery with the negative electrode including the silicon-based negative electrode active material that undergoes a drastic volume change during charge and discharge, and may suppress unnecessary side reactions of electrolyte decomposition, so that the lithium secondary battery with the improved overall performance may be implemented.

### MODE FOR CARRYING OUT THE INVENTION

Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

In the descriptions herein below, terms such as "contain," "include," and "have" are intended to designate the presence of features, numerals, steps, components, or combinations thereof described herein, but should not be interpreted to exclude the presence or possible addition of one or more other features, numerals, steps, components, or combinations thereof.

In the expression "a to b carbon atoms" throughout the descriptions, "a" and "b" each refer to the number of carbon atoms included in a specific functional group. That is, the functional group may include "a" to "b" carbon atoms. For example, an "alkylene group having 1 to 5 carbon atoms" indicates an alkylene group including 1 to 5 carbon atoms such as -CH₂-, -CH₂CH₂-, -CH₂CH₂CH₂-, -CH₂(CH₃)CH-, -CH(CH₃)CH₂-, and-CH(CH₃)CH₂CH₂-.

In the descriptions herein, an "alkylene group" indicates a branched or unbranched bivalent saturated hydrocarbon group.

In the descriptions herein, an alkyl group may be substituted or unsubstituted. Unless otherwise defined, the term "substitution" indicates that at least one hydrogen bonded to a carbon is substituted with an element other than hydrogen.

Hereinafter, the present disclosure will be described in more detail.

In order to implement the high energy density, a lithium secondary battery may use, for its positive electrode, a transition metal-based lithium metal oxide such as nickel (Ni), cobalt (Co), or manganese (Mn), and may use, for its negative electrode, a silicon-based negative electrode active material such as silicon (Si) or a silicon oxide (SiOx) that may be alloyed with lithium ions and has a high theoretical capacity. However, in a case of operating the secondary battery with the negative electrode to which the silicon-based negative electrode active material is applied, the durability of a film formed on the surface of the negative electrode (*e.g.,* the SEI film) may deteriorate because of the drastic volume change during repeated charge and discharge, which may result in the degradation of capacity.

The degradation in capacity of the secondary battery tends to become faster when the battery is exposed to a high temperature, and as a consequence, the cycle characteristics of the secondary battery may deteriorate.

Further, when the lithium secondary battery is used continuously for a long time or left under a high temperature environment, a gas occurs, resulting in a so-called swelling (expansion or deformation) phenomenon that the thickness of the battery increases. It is known that the amount of gas occurring at this time depends on the state of the SEI.

Thus, the present disclosure provides lithium secondary batteries having a non-aqueous electrolyte capable of suppressing the swelling phenomenon and enhancing the stability at a high temperature.

### Non-Aqueous Electrolyte

A non-aqueous electrolyte according to the present disclosure may contain: a lithium salt; an organic solvent; a compound of Formula 1 below as a first additive; and a compound of Formula 2 below as a second additive.

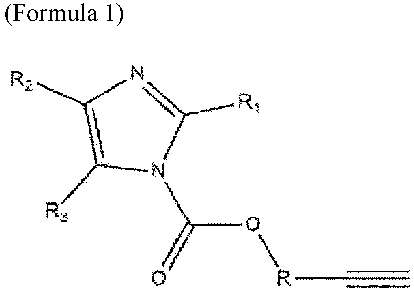

In Formula 1 above, R is an alkylene group having 1 to 5 carbon atoms, which may be substituted with fluorine, and R₁ to R₃ are each independently any one selected from the group consisting of H, an alkyl group having 1 to 5 carbon atoms, and a nitrile group.

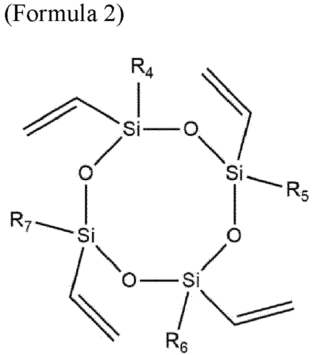

In Formula 2 above, R₄ to R₇ are each independently any one selected from the group consisting of an alkyl group having 1 to 10 carbon atoms, which may be substituted with fluorine, and an alkenyl group having 2 to 10 carbon atoms, which may be substituted with fluorine.

A lithium secondary battery according to the present disclosure includes the compound represented by Formula 1 below as a first additive to the non-aqueous electrolyte. The compound of Formula 1 includes a propargyl group with a triple bond and oxygen atoms, and the propargyl group is known to have a metal ion adsorption performance. Thus, the propargyl group separated by the cleavage between nitrogen (N) atoms and carbon (C) atoms of the imidazole group may adsorb metal foreign substances such as Fe, Co, Mn, and Ni eluted from the positive electrode of the lithium secondary battery during a high-voltage charge, thereby effectively suppressing the negative electrode deterioration phenomenon caused by the electrodeposition of the metal foreign substances on the surface of the negative electrode. Further, in the compound represented by Formula 1, lone electron pairs of the nitrogen (N) atoms of the imidazole group are reduced at the surface of the negative electrode by reacting with polyvinylenecarbonate, which is a decomposition product of fluoroethylene carbonate (FEC) used as an organic solvent, so that a stable ion-conductive film may be formed on the surface of the negative electrode. Accordingly, not only an additional electrolyte decomposition reaction may be inhibited during the charge and discharge cycles, but also the absorption and release of lithium ions from the negative electrode may be facilitated even during an overcharge or a high-temperature storage, which may improve the cycle life characteristics and the high-temperature storage performance of the secondary battery.

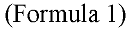

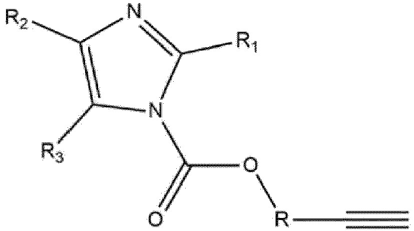

In Formula 1 above, R may be an alkylene group having 1 to 5 carbon atoms, which may be substituted with fluorine, and for example, an alkylene group having 1 to 3 carbon atoms.

In Formula 1 above, R₁ to R₃ may be each independently any one selected from the group consisting of H, an alkyl group having 1 to 5 carbon atoms, and a nitrile group, and for example, any one selected from the group consisting of H and an alkyl group having 1 to 3 carbon atoms.

For example, the compound of Formula 1 above may be any one selected from the group consisting of Formulas 1-1 to 1-3 below.

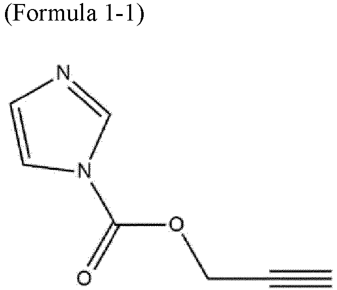

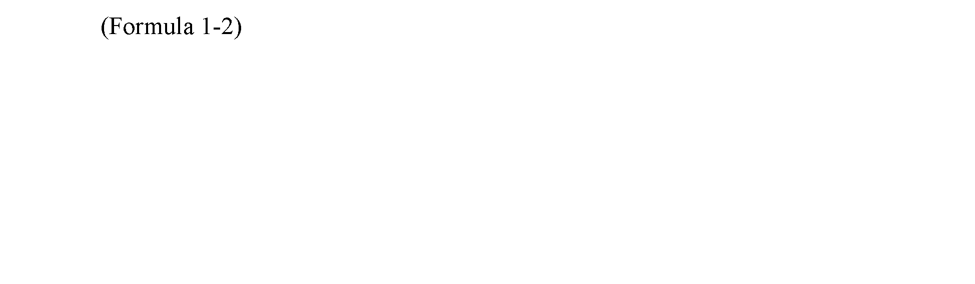

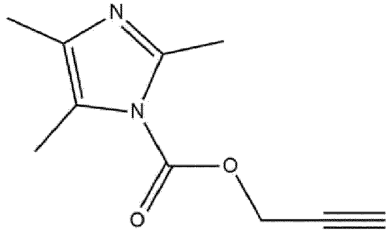

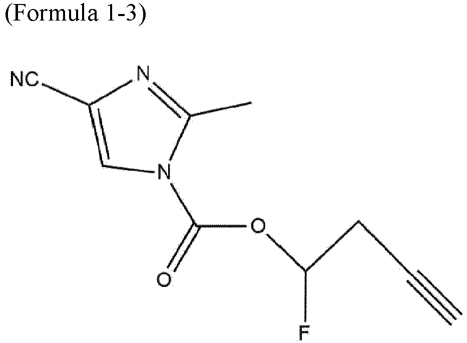

The lithium secondary battery according to the present disclosure includes the compound represented by Formula 2 below as a second additive to the non-aqueous electrolyte. The compound of Formula 2 may easily be reduced by the ring opening reaction, so that an SEI layer including polysiloxane may be formed on the negative electrode. Since the SEI layer with the polysiloxane structure have the high shear modulus of elasticity (the degree of ability to resist shear stress), it may withstand the drastic volume change of the negative electrode.

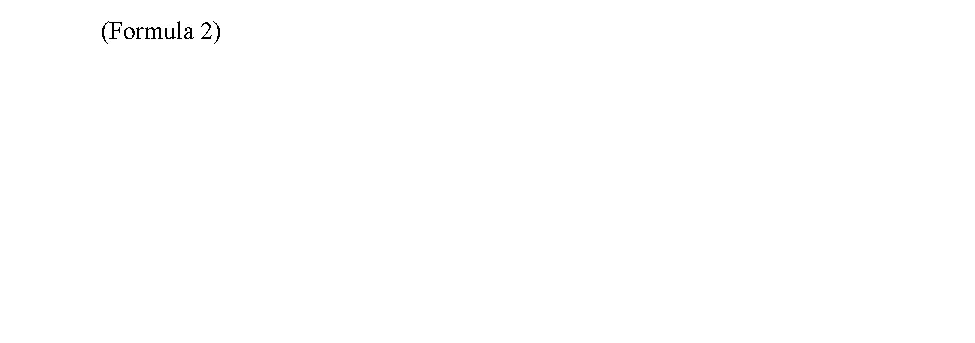

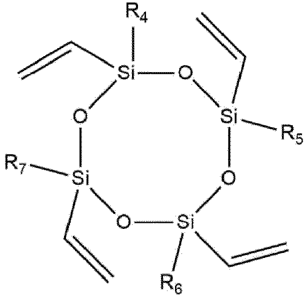

In Formula 2 above, R₄ to R₇ may be each independently any one selected from the group consisting of an alkyl group having 1 to 10 carbon atoms, which may be substituted with fluorine, and an alkenyl group having 2 to 10 carbon atoms, which may be substituted with fluorine, for example, an alkyl group having 1 to 5 carbon atoms, which may be substituted with fluorine, or an alkyl group having 1 to 3 carbon atoms, which is substituted with fluorine. When a fluorine group is substituted in the compound of Formula 2, a robust and elastic polymeric film including an inorganic material such as LiF may be formed on the electrode.

For example, the compound of Formula 2 above may be any one selected from the group consisting of Formulas 2-1 to 2-3 below.

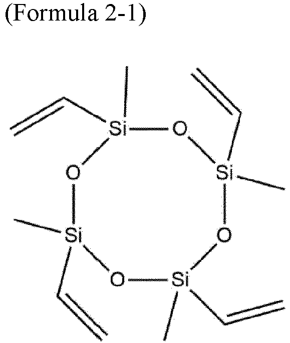

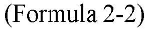

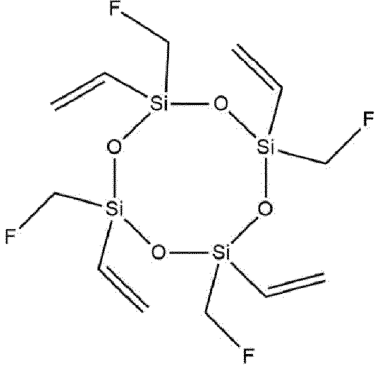

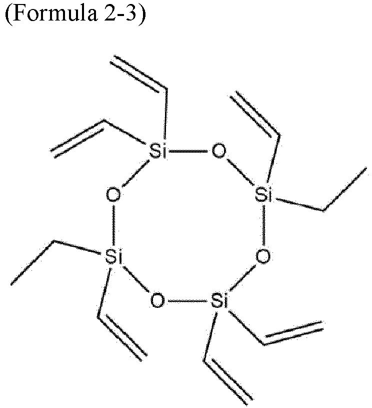

When the non-aqueous electrolyte of the present disclosure that contains the first additive and the second additive is used, radicals generated by the cleavage of the ring structure of the first additive accelerate the film formation reaction of the second additive. The film formed by the interaction of the first additive and the second additive has the superior lithium ion transfer performance due to the presence of imidazole or a structure derived therefrom in the cyclic alkyl group-based film, so that the overall performance of the lithium secondary battery, including the charge/discharge characteristics and the power characteristics, is improved. The film formed by the interaction of the first additive and the second additive has excellent oxidation resistance, so that side reactions occurring in the films of the positive and negative electrodes may be inhibited even in the acidic atmosphere of the electrolyte. Further, the film formed by the interaction of the first additive and the second additive exhibits excellent durability against the volume change of the negative electrode that occurs during charge and discharge. Therefore, the non-aqueous electrolyte of the present disclosure may form the electrode-electrolyte interface that has relatively high stability and durability at a high temperature and may inhibit unnecessary side reactions of electrolyte decomposition, so that the lithium secondary battery having the improved overall performance may be implemented.

In the non-aqueous electrolyte according to the present disclosure, the first additive may be contained in a content of 0.01 parts by weight to 10 parts by weight, for example, 0.1 parts by weight to 5.0 parts by weight, or 0.5 parts by weight to 3.0 parts by weight with respect to 100 parts by weight of the non-aqueous electrolyte. When the content of the first additive meets the range above, the effect in forming the film on the negative electrode may be sufficiently achieved, which leads to the outstanding effects in the life characteristics at a high temperature and the high-temperature storage characteristics.

In the non-aqueous electrolyte according to the present disclosure, the second additive may be contained in a content of 0.01 parts by weight to 10 parts by weight, for example, 0.1 parts by weight to 5.0 parts by weight, or 0.5 parts by weight to 3.0 parts by weight with respect to 100 parts by weight of the non-aqueous electrolyte. When the content of the second additive meets the range above, the effect in forming the film on the negative electrode may be sufficiently achieved, which leads to the outstanding effects in the life characteristics at a high temperature and the high-temperature storage characteristics.

In the non-aqueous electrolyte of the present disclosure, the first additive and the second additive may be contained in a weight ratio of 1:0.002 to 1:500, for example, 1:0.1 to 1:10, or 1:0.2 to 1:5. When this range is met, the elasticity of the SEI film comes within an appropriate range, so that the SEI film may remain robust during charge and discharge or at a high temperature.

The non-aqueous electrolyte according to the present disclosure may contain the lithium salt. The lithium salt is used as an electrolyte salt in the lithium secondary battery, and serves as a medium for transferring ions. Typically, the lithium salt includes, for example, Li⁺ as positive ions, and includes, as negative ions, at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻.

For example, the lithium salt may include a single substance or a mixture of two or more substances selected from the group consisting of LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂ (lithium bis(fluorosulfonyl)imide; LiFSI), LiN(SO₂CF₂CF₃)₂ (lithium bis(perfluoroethenesulfonyl)imide; LiBETI), and LiN(SO₂CF₃)₂ (lithium bis(trifluoromethanesulfonyl)imide; LiTFSI). Other lithium salts commonly used for the electrolyte of lithium secondary batteries may be used without limitation.

The concentration of the lithium salt may be appropriately changed in a generally allowable range, but in order to achieve an optimal effect in forming a film for preventing the corrosion of the electrode surface, the lithium salt may be contained in the electrolyte at a concentration of 0.5 M to 5.0 M, for example, 1.0 M to 3.0 M, or 1.2 M to 2.0 M. When the concentration of the lithium salt meets the range above, a sufficient effect may be obtained in improving the cycle characteristics during the storage of the lithium secondary battery at a high temperature, and the viscosity of the non-aqueous electrolyte becomes appropriate, improving the electrolyte impregnation.

The non-aqueous electrolyte according to the present disclosure may contain the organic solvent. The organic solvent may include at least one organic solvent selected from the group consisting of a cyclic carbonate-based organic solvent, a linear carbonate-based organic solvent, a linear ester-based organic solvent, and a cyclic ester-based organic solvent.

The additives according to the present disclosure are effective particularly when a cyclic carbonate solvent is used. When conventional electrolyte additives are used together with the cyclic carbonate solvent, there has been a problem in that the decomposition of the cyclic carbonate solvent occurs continuously because the SEI film formed by the decomposition of the cyclic carbonate solvent does not stay maintained due to the volume change of the negative electrode that occurs as the cycles progress. As a result, the ionic conductivity of the electrolyte declines, causing the problem of deteriorating the cycle characteristics. Meanwhile, when the combination of the additives according to the present disclosure is used together with the cyclic carbonate solvent, the robust SEI film is formed, so that the cycle characteristics is improved.

The cyclic carbonate-based organic solvent is an organic solvent with the high viscosity, and is an organic solvent with the high dielectric permittivity that may easily dissociate the lithium salt in the electrolyte. Specific examples of the cyclic carbonate-based organic solvent include at least one organic solvent selected from the group consisting of ethylene carbonate (EC), propylene carbonate (PC), fluoroethylene carbonate (FEC), 1,2-butylene carbonate, 2,3-butylene carbonate, 1,2-pentylene carbonate, 2,3-pentylene carbonate, and vinylene carbonate, and may be particularly fluoroethylene carbonate (FEC). When fluoroethylene carbonate (FEC) is used as the organic solvent, the excellent reducibility of FEC causes the interaction with the first and second additives, so that a more robust film may be formed on the silicon-based negative electrode, in which substantial volume change occurs during charge and discharge.

The linear carbonate-based organic solvent is an organic solvent having the low viscosity and the low dielectric permittivity, and specific examples thereof include at least one organic solvent selected from the group including dimethyl carbonate (DMC), diethyl carbonate (DEC), dipropyl carbonate, and ethylmethyl carbonate (EMC), methylpropyl carbonate, and ethylpropyl carbonate, and may be particularly ethylmethyl carbonate (EMC) and diethyl carbonate (DEC).

Further, in order to prepare an electrolyte having high ionic conductivity, the organic solvent may further include at least one ester-based organic solvent selected from the group consisting of a linear ester-based organic solvent and a cyclic ester-based organic solvent, in addition to at least one carbonate organic solvent selected from the group including one or more of the cyclic carbonate-based organic solvent and the linear carbonate-based organic solvent.

Examples of the linear ester-based organic solvent include at least one organic solvent selected from the group consisting of methyl acetate, ethyl acetate, propyl acetate, methyl propionate, ethyl propionate, propyl propionate, and butyl propionate.

Further, examples of the cyclic ester-based organic solvent include at least one organic solvent selected from the group consisting of γ-butyrolactone, γ-valerolactone, γ-caprolactone, σ-valerolactone, and ε-caprolactone.

Meanwhile, the organic solvent may additionally use organic solvents commonly used for the non-aqueous electrolyte without limitation, if necessary. For example, the organic solvent may further include at least one organic solvent among an ether-based organic solvent, a glyme-based solvent, and a nitrile-based organic solvent.

The ether-based solvent may be any one substance or a mixture of two or more substances selected from the group consisting of dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL).

The glyme-based solvent has the high dielectric permittivity and the low surface tension, relative to the linear carbonate-based organic solvent, and less reacts with metals, and may include, but is not limited to, at least one selected from the group consisting of dimethoxyethane (glyme, DME), diethoxyethane, diglyme, triglyme, and tetraglyme (TEGDME).

The nitrile-based solvent may be, but is not limited to, at least one selected from the group consisting of acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

Further, in order to enhance, for example, the effects of preventing the collapse of the negative electrode caused from the decomposition of the non-aqueous electrolyte in a high power environment, improving the low-temperature high-rate discharge characteristics and the high temperature stability, preventing the overcharge, and suppressing the battery swelling at a high temperature, the non-aqueous electrolyte of the present disclosure may additionally include well-known electrolyte additives, if necessary.

Examples of the additional electrolyte additives include at least one SEI film-formation additive selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may be, for example, vinylene carbonate (VC) or vinylethylene carbonate.

The halogen-substituted carbonate-based compound may be, for example, fluoroethylene carbonate (FEC).

The sultone-based compound may be, for example, at least one compound selected from the group consisting of 1,3-propanesultone (PS), 1,4-butanesultone, ethenesultone, 1,3-propenesultone (PRS), 1,4-butenesultone, and 1-methyl-1,3-propenesultone.

The sulfate-based compound may be, for example, ethylene sulfate (Esa), trimethylene sulfate (TMS), or methyl trimethylene sulfate (MTMS).

The phosphate-based compound may be, for example, one or more compounds selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(2,2,2-trifluoroethyl)phosphite.

The borate-based compound may be, for example, tetraphenylborate, lithium difluoro(oxalato)borate (LiODFB), or lithium bisoxalato borate (LiB(C₂O₄)₂, LiBOB).

The nitrile-based compound may be, for example, at least one compound selected from the group consisting of succinonitrile, adiponitrile, acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be, for example, fluorobenzene, the amine-based compound may be, for example, triethanolamine or ethylenediamine, and the silane-based compound may be, for example, tetravinylsilane.

The lithium salt-based compound is different from the lithium salt contained in the non-aqueous electrolyte, and may be, for example, lithium difluorophosphate (LiDFP), LiPO₂F₂, or LiBF₄.

Among the additional electrolyte additives above, when a combination of vinylene carbonate (VC), 1,3-propanesultone (PS), ethylene sulfate (Esa), and lithium difluorophosphate (LiDFP) is additionally contained, it is possible to form a more robust SEI film on the surface of the negative electrode during the initial activation process of the secondary battery, and it is possible to decrease the generation of gas that may occur due to the decomposition of the electrolyte at a high temperature, so that the high-temperature stability of the secondary battery is improved over the conventional secondary batteries.

The additional electrolyte additives may be used as a mixture of two or more thereof, which may be contained in a content of 0.050 wt% to 20 wt%, for example, 0.10 wt% to 15 wt%, or 0.30 wt% to 10 wt% based on the total weight of the non-aqueous electrolyte. When the content of the additional electrolyte additives meets the range above, more superior effects are achieved in improving the ionic conductivity and the cycle characteristics as compared to the conventional lithium secondary batteries.

### Lithium Secondary Battery

The present disclosure further provides a lithium secondary battery including the non-aqueous electrolyte described above.

For example, the lithium secondary battery according to the present disclosure includes: a negative electrode including a silicon-based negative electrode active material; a positive electrode; a separator; and the non-aqueous electrolyte described above.

The lithium secondary battery of the present disclosure may be manufactured according to common well-known methods in related art. For example, the lithium secondary battery may be manufactured by sequentially stacking the positive electrode, the negative electrode, and the separator between the positive electrode and the negative electrode to form an electrode assembly, inserting then the electrode assembly into a battery case, and injecting the non-aqueous electrolyte of the present disclosure.

The positive electrode included in the lithium secondary battery of the present disclosure may be fabricated by coating, on a positive electrode collector, a positive electrode composite slurry containing, for example, a positive electrode active material, a binder, a conductive agent, a solvent and the like.

The positive electrode collector is not particularly limited as long as it maintains the conductivity without causing chemical changes in the battery, and may be, for example, a stainless steel, aluminum, nickel, titanium, calcined carbon, or aluminum or a stainless steel with the surface thereof processed with, for example, carbon, nickel, titanium, or silver. Further, the positive electrode collector may have microscopic irregularities on the surface thereof, to enhance the bonding strength of the positive electrode active material, and may be used in various forms such as a film, a sheet, foil, a net, a porous material, a foam, and nonwoven fabric.

The positive electrode active material is a compound allowing reversible intercalation and deintercalation of lithium, and may include a lithium metal oxide containing lithium and one or more metals such as cobalt, manganese, nickel, or aluminum. For example, the lithium metal oxide may include one or more compounds among lithium-manganese-based oxides (*e.g.*, LiMnO₂ and LiMn₂O₄), lithium-cobalt-based oxides (*e.g.,* LiCoO₂), lithium-nickel-based oxides (*e.g.,* LiNiO₂), lithium-nickel-manganese-based oxides (e.g., LiNi_{1-Y}Mn_{Y}O₂ (where 0<Y<1) and LiMn_{2-Z}Ni_{Z}O₄ (where 0<Z<2)), lithium-nickel-cobalt-based oxides (*e.g.*, LiNi_{1-Y1}Co_{Y1}O₂ (where 0<Y1<1)), lithium-manganese-cobalt-based oxides (*e.g.,* LiCo_{1-Y2}Mn_{Y2}O₂ (where 0<Y2<1) and LiMn_{2-ZA1}Co_{Z1}O₄ (where 0<Z1<2)), lithium-nickel-manganese-cobalt-based oxides (*e.g.*, Li(NiₚCo_{q}Mnᵣ)O₂ (where 0<p<1, 0<q<1, 0<r<1, and p+q+r=1) and Li(Niₚ₁Co_{q1}Mnᵣ₁)O₄ (where 0<p1<2, 0<q1<2, 0<r1<2, and p1+q1+r1=2)), and lithium-nickel-cobalt-transition metal (M) oxides (*e.g.*, Li(Niₚ₂Co_{q2}Mnᵣ₂Mₛ₂)O₂ (where M is selected from the group consisting of Al, Fe, V, Cr, Ti, Ta, Mg, and Mo, p2, q2, r2, and s2 are each an atomic fraction of an independent element and satisfy 0<p2<1, 0<q2<1, 0<r2<1, 0<s2<1, and p2+q2+r2+s2=1)).

Among the compounds above, the nickel-cobalt-manganese-based oxide may be used as the lithium metal oxide from the view point of improving the capacity characteristics and the stability of the battery.

For example, the lithium-nickel-cobalt-manganese oxide may have the composition represented by Formula 3 below.

(Formula 3) LiₓNiₐCo_{b}M¹_{c}M²_{d}O₂

In Formula 3 above, M¹ may be Mn or a combination of Mn and Al, and for example, the combination of Mn and Al from the viewpoint of enhancing the structural stability.

In Formula 3 above, M² may be at least one species selected from the group consisting of Zr, W, Y, Ba, Ca, Ti, Mg, Ta, and Nb.

The "x" represents the atomic fraction of lithium in the lithium nickel-cobalt-manganese-based oxide, and may satisfy 0.90≤x≤1.1, for example, 0.95≤x≤1.08, or 1.0≤x≤1.08.

The "a" represents the atomic fraction of nickel among the metal elements excluding lithium in the lithium nickel-cobalt-manganese-based oxide, and may satisfy 0.80≤a<1.0, for example, 0.80≤a≤0.95, or 0.80≤a≤0.90. When the content of nickel meets the range above, the high capacity characteristics may be implemented.

The "b" represents the atomic fraction of cobalt among the metal elements excluding lithium in the lithium nickel-cobalt-manganese-based oxide, and may satisfy 0<b<0.2, 0<b≤0.15, or 0.01≤b≤0.10.

The "c" represents the atomic fraction of M¹ among the metal elements excluding lithium in the lithium nickel-cobalt-manganese-based oxide, and may satisfy 0<c<0.2, 0<c≤0.15, or 0.01≤c≤0.10.

The "d" represents the atomic fraction of M² among the metal elements excluding lithium in the lithium nickel-cobalt-manganese-based oxide, and may satisfy 0≤d≤0.1 or 0≤d≤0.05.

The positive electrode active material may be contained in a content of 60 wt% to 99 wt%, for example, 70 wt% to 99 wt%, or 80 wt% to 98 wt% based on the total weight of the solids excluding the solvent in the positive electrode composite slurry.

The binder is a component that assists the bond among the active material and the conductive agent, etc., and the bond to the current collector.

Examples of the binder include polyvinylidene fluoride (PVDF), polyvinyl alcohol, starch, hydroxypropylcellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, a styrene-butadiene rubber, a fluorinated rubber, and various copolymers thereof.

Typically, the binder may be contained in a content of 1 wt% to 20 wt%, for example, 1 wt% to 15 wt%, or 1 wt% to 10 wt% based on the total weight of the solids excluding the solvent in the positive electrode composite slurry.

The conductive agent is a component that further improves the conductivity of the positive electrode active material, and may be added in a content of 1 wt% to 20 wt% based on the total weight of the solids in the positive electrode composite slurry. The conductive agent is not particularly limited as long as it has the conductivity without causing chemical changes in the battery, and may be, for example, a conductive material including: carbon powder such as carbon black, acetylene black, ketchen black, channel black, furnace black, lamp black, or thermal black; graphite powder such as natural graphite with a well-developed crystalline structure, artificial graphite, or graphite; conductive fiber such as carbon fiber or metal fiber; carbon fluoride powder; conductive powder such as aluminum powder or nickel powder; conductive whisker such as zinc oxide or potassium titanate; a conductive metal oxide such as titanium oxide; and a polyphenylene derivative.

Typically, the conductive agent may be contained in a content of 1 wt% to 20 wt%, for example, 1 wt% to 15 wt%, and, for example, 1 wt% to 10 wt% based on the total weight of the solids excluding the solvent in the positive electrode composite slurry.

The solvent may include an organic solvent such as N-methyl-2-pyrrolidone (NMP), and may be used in an amount that achieves a desirable viscosity when the positive electrode active material is contained, and the binder and the conductive agent, etc., are selectively contained. For example, the solvent may be contained such that the concentration of the solids including the positive electrode active material and selectively the binder and the conductive agent becomes 50 wt% to 95 wt%, for example, 70 wt% to 95 wt%, or 70 wt% to 90 wt%.

The negative electrode included in the lithium secondary battery of the present disclosure may be fabricated by coating, on a negative electrode collector, a negative electrode composite slurry containing, for example, a negative electrode active material, a binder, a conductive agent, a solvent and the like.

For example, when the negative electrode is fabricated by coating the negative electrode composite slurry on the negative electrode collector, the negative electrode collector typically has a thickness of 3 µm to 500 µm. The negative electrode collector is not particularly limited as long as it has the high conductivity without causing chemical changes in the battery, and may be, for example, copper, a stainless steel, aluminum, nickel, titanium, calcined carbon, copper or a stainless steel with the surface thereof processed with, for example, carbon, nickel, titanium, silver, or an aluminum-cadmium alloy. Similarly to the positive electrode collector, the negative electrode collector may also have microscopic irregularities on the surface thereof, to enhance the bonding strength of the negative electrode active material, and may be used in various forms such as a film, a sheet, foil, a net, a porous material, a foam, and nonwoven fabric.

The characteristics of the negative electrode of the present disclosure lie in including the silicon-based negative electrode active material. When the silicon-based negative electrode active material is used, the lithium secondary battery with the high energy density may be provided. The silicon-based negative electrode active material may be Si or SiOx (0<x≤2), and for example, may include Si only to provide the highest energy density. In case of using the Si-based negative electrode active material, unless the robust SEI layer is formed on the surface of the negative electrode during the initial activation, the degradation of the life characteristics is accelerated due to the drastic volume expansion and shrinkage as the cycle progresses. However, in the lithium secondary battery of the present disclosure, the elastic and robust SEI layer may be formed, so that the excellent life characteristics and storage characteristics may be provided while using the Si-based negative electrode active material.

The negative electrode active material may be contained in a content of 60 wt% to 99 wt%, for example, 70 wt% to 99 wt%, or 80 wt% to 98 wt% based on the total weight of the solids in the negative electrode composite slurry.

Examples of the binder include polyvinylidene fluoride (PVDF), polyvinyl alcohol, starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluorinated rubber, and various copolymers thereof. In consideration of a high thickening property, styrene-butadiene rubber (SBR)-carboxymethylcellulose (CMC) may be used.

Typically, the binder may be contained in a content of 1 wt% to 20 wt%, for example, 1 wt% to 15 wt%, or 1 wt% to 10 wt% based on the total weight of the solids excluding the solvent in the negative electrode composite slurry.

The conductive agent is a component that further improves the conductivity of the negative electrode active material, and may be added in 1 wt% to 20 wt% based on the total weight of the solids in the negative electrode composite slurry. The conductive agent is not particularly limited as long as it has the conductivity without causing chemical changes in the battery, and may be, for example, a conductive material including: carbon powder such as carbon black, acetylene black, ketchen black, channel black, furnace black, lamp black, or thermal black; graphite powder such as natural graphite with a well-developed crystalline structure, artificial graphite, or graphite; conductive fiber such as carbon fiber or metal fiber; carbon fluoride powder; conductive powder such as aluminum powder or nickel powder; conductive whisker such as zinc oxide or potassium titanate; conductive metal oxide such as titanium oxide; and a polyphenylene derivative.

The conductive agent may be contained in a content of 1 wt% to 20 wt%, for example, 1 wt% to 15 wt%, or 1 wt% to 10 wt% based on the total weight of the solids excluding the solvent in the negative electrode composite slurry.

The solvent may include an organic solvent such as N-methyl-2-pyrrolidone (NMP), and may be used in an amount that achieves a desirable viscosity when the negative electrode active material is contained, and the binder and the conductive agent, etc., are selectively contained. For example, the solvent may be contained such that the concentration of the solids including the negative electrode active material and selectively the binder and the conductive agent becomes 50 wt% to 95 wt%, and for example, 70 wt% to 90 wt%.

The separator may be a common porous polymer film, which is used as a separator in related art, and may be used, for example, in a single-layer or stacked form of a porous polymer film made of a polyolefin-based polymer such as an ethylene homopolymer, a propylene homopolymer, an ethylene/butene copolymer, an ethylene/hexene copolymer, or an ethylene/methacrylate copolymer. Alternatively, the separator may be, but is not limited to, a common porous nonwoven fabric, for example, a nonwoven fabric made of a glass fiber with a high melting point or a polyethylene terephthalate fiber. Further, in order to ensure the thermal resistance or mechanical strength, a separator coated including a ceramic component or a polymeric material may be used, and may be used selectively in a single-layer or multi-layer structure.

For example, the separator may include a porous separator substrate and a porous coating layer coated entirely on one or both surfaces of the separator substrate, and the coating layer may include a mixture of inorganic particles selected from a metal oxide, a semi-metal oxide, a metal fluoride, a metal hydroxide, and combinations thereof, and a binder polymer that connects and immobilizes the inorganic particles.

The coating layer may include, as the inorganic particles, one or more species selected from Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, and MgF. Here, the inorganic particles may improve the thermal stability of the separator. That is, the inorganic particles may prevent the shrinkage of the separator at a high temperature. Further, the binder polymer may improve the mechanical stability of the separator by immobilizing the inorganic particles.

The appearance of the lithium secondary battery of the present disclosure is not particularly limited, but may have, for example, a cylindrical shape, an angular shape, a pouch shape, or a coin shape having a round or rectangular in cross-section.

Hereinafter, the present disclosure will be described in more detail using Examples. The Examples below are merely intended to facilitate the understanding of the present disclosure, and are not intended to limit the scope of the present disclosure. It is apparent to persons skilled in the art that various modifications and alterations may be made within the technical scope of the present disclosure, and the modifications and alternations are included in the scope of the claims attached herewith.

### Examples

### Example 1

### (Preparation of Non-Aqueous Electrolyte)

LiPF₆ was dissolved in an organic solvent (fluoroethylene carbonate (FEC):ethylmethyl carbonate (EMC):diethyl carbonate (DEC)=20:70:10 by volume) such that the concentration of LiPF₆ becomes 1.3 M, to prepare a non-aqueous solvent. Then, 0.1 g of the compound of Formula 1-1 below and 0.1 g of the compound of Formula 2-1 below were added to 99.8 g of the non-aqueous solvent, so that a non-aqueous electrolyte was prepared.

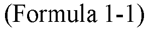

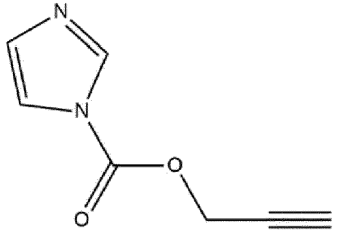

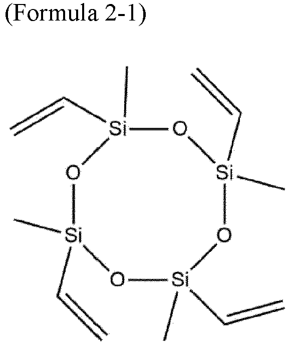

### (Manufacturing of Lithium Secondary Battery)

A positive electrode active material (LiNi_{0.85}Co_{0.05}Mn_{0.08}Al_{0.02}O₂):a conductive agent (carbon nanotube):a binder (polyvinylidene fluoride) were added to the solvent of N-methyl-2-pyrrolidone (NMP) in a weight ratio of 97.74:0.7:1.56, to prepare a positive electrode slurry (75.5 wt% solids). The positive electrode slurry was coated on one surface of a positive electrode collector (Al thin film) with a thickness of 15 µm, and a drying and a roll pressing were performed to prepare the positive electrode.

A negative electrode active material (silicon; Si): a conductive agent (carbon black): a binder (styrene-butadiene rubber (SBR)-carboxymethyl cellulose (CMC)) were added to the solvent of N-methyl-2-pyrrolidone (NMP) in a weight ratio of 70:20.3:9.7 to prepare a negative electrode slurry (26 wt% solids). The negative electrode slurry was coated on one surface of a negative electrode collector (Cu thin film) with a thickness of 15 µm, and a drying and a roll pressing were performed to prepare the negative electrode.

In a dry room, a polyolefin-based porous separator coated with inorganic particles Al₂O₃ was interposed between the prepared positive and negative electrodes, and then, the prepared non-aqueous electrolyte was injected, so that the secondary battery was manufactured.

### Example 2

A secondary battery was prepared in the same manner as in Example 1, except that the non-aqueous electrolyte was prepared by adding 0.1 g of the compound of Formula 1-1 and 5 g of the compound of Formula 2-1 to 94.9 g of the non-aqueous solvent prepared in Example 1.

### Example 3

A secondary battery was prepared in the same manner as in Example 1, except that the non-aqueous electrolyte was prepared by adding 5 g of the compound of Formula 1-1 and 0.1 g of the compound of Formula 2-1 to 94.9 g of the non-aqueous solvent prepared in Example 1.

### Example 4

A secondary battery was prepared in the same manner as in Example 1, except that the non-aqueous electrolyte was prepared by adding 2 g of the compound of Formula 1-1 and 2 g of the compound of Formula 2-1 to 96 g of the non-aqueous solvent prepared in Example 1.

### Example 5

A secondary battery was prepared in the same manner as in Example 1, except that the non-aqueous electrolyte was prepared by adding 0.1 g of the compound of Formula 1-2 below and 0.1 g of the compound of Formula 2-1 to 99.8 g of the non-aqueous solvent prepared in Example 1.

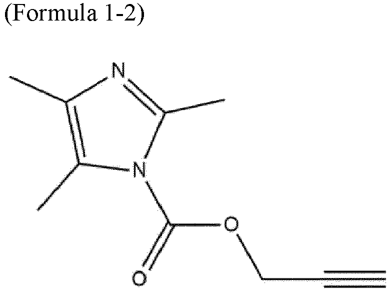

### Example 6

A secondary battery was prepared in the same manner as in Example 1, except that the non-aqueous electrolyte was prepared by adding 0.1 g of the compound of Formula 1-3 below and 0.1 g of the compound of Formula 2-1 to 99.8 g of the non-aqueous solvent prepared in Example 1.

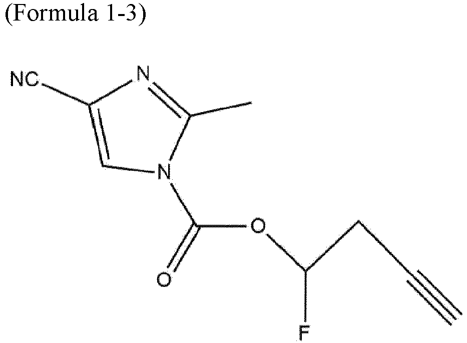

### Example 7

A secondary battery was prepared in the same manner as in Example 1, except that the non-aqueous electrolyte was prepared by adding 0.1 g of the compound of Formula 1-1 and 0.1 g of the compound of Formula 2-2 below to 99.8 g of the non-aqueous solvent prepared in Example 1.

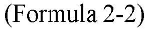

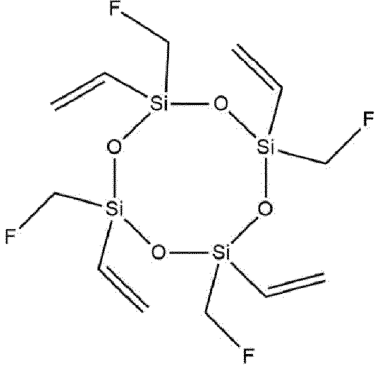

### Example 8

A secondary battery was prepared in the same manner as in Example 1, except that the non-aqueous electrolyte was prepared by adding 0.1 g of the compound of Formula 1-1 and 0.1 g of the compound of Formula 2-3 below to 99.8 g of the non-aqueous solvent prepared in Example 1.

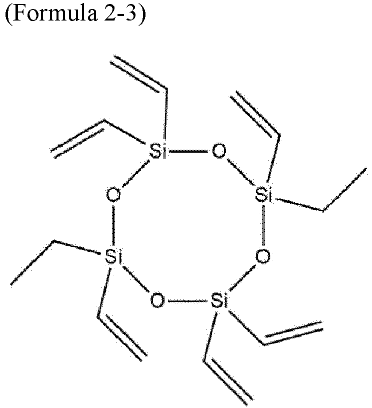

### Comparative Example 1

A secondary battery was prepared in the same manner as in Example 1, except that the non-aqueous electrolyte was prepared by adding 0.1 g of the compound of Formula 1-1 to 99.9 g of the non-aqueous solvent prepared in Example 1.

### Comparative Example 2

A secondary battery was prepared in the same manner as in Example 1, except that the non-aqueous electrolyte was prepared by adding 5 g of the compound of Formula 1-1 to 95 g of the non-aqueous solvent prepared in Example 1.

### Comparative Example 3

A secondary battery was prepared in the same manner as in Example 1, except that the non-aqueous electrolyte was prepared by adding 0.1 g of the compound of Formula 2-1 to 99.9 g of the non-aqueous solvent prepared in Example 1.

### Comparative Example 4

A secondary battery was prepared in the same manner as in Example 1, except that the non-aqueous electrolyte was prepared by adding 5 g of the compound of Formula 2-1 to 95 g of the non-aqueous solvent prepared in Example 1.

### Experimental Example 1 - Evaluation of High-Temperature Cycle Characteristics

An evaluation was conducted on the cycle characteristics of each of the secondary batteries manufactured in Examples 1 to 8 and Comparative Examples 1 to 4.

For example, each of the batteries manufactured in Examples 1 to 8 and Comparative Examples 1 to 4 was charged to 4.2 V at a rate of 0.33 C (0.05 C cut off) under a constant current-constant voltage condition at 45 °C, and discharged to 3.0 V at a rate of 0.33 C under a constant current condition. The charging and discharging process was set as one cycle, and 200 cycles were performed. Then, the capacity retention after the 200 cycles relative to the initial capacity after one cycle was measured. Further, the increase rate of resistance after the 200 cycles relative to the initial resistance after one cycle was measured. Table 1 below provides the results.

**[Table 1]**

| | Capacity Retention (%) | Increase Rate of Resistance (%) |
|---|---|---|
| Example 1 | 82.8 | 50.5 |
| Example 2 | 87.3 | 45.7 |
| Example 3 | 86.1 | 46.6 |
| Example 4 | 91.5 | 38.6 |
| Example 5 | 78.5 | 60.2 |
| Example 6 | 83.1 | 49.0 |
| Example 7 | 84.6 | 48.6 |
| Example 8 | 85.6 | 47.2 |
| Comparative Example 1 | 63.8 | 98.4 |
| Comparative Example 2 | 66.2 | 96.2 |
| Comparative Example 3 | 64.5 | 97.1 |
| Comparative Example 4 | 68.4 | 93.5 |

### Experimental Example 2 - Evaluation of High-Temperature Storage Characteristics

An evaluation was conducted on the high-temperature storage characteristics of each of the secondary batteries manufactured in Examples 1 to 8 and Comparative Examples 1 to 4.

For example, each of the secondary batteries manufactured in Examples 1 to 8 and Comparative Examples 1 to 4 was fully charged to 4.2 V, and then, stored at 60 °C for 8 weeks.

Prior to the storage, the capacity of the fully charged secondary battery was measured and set as the capacity of the initial secondary battery.

After 8 weeks, the capacity of the stored secondary battery was measured to calculate the capacity decreased for the storage time period of 8 weeks. The percentage of the decreased capacity relative to the capacity of the initial secondary battery was calculated to obtain the capacity retention after 8 weeks. Further, the percentage of the resistance increased from the resistance of the initial secondary cell was calculated to obtain the increase rate of resistance after 8 weeks. Table 2 below provides the results.

**[Table 2]**

| | Capacity Retention (%) | Increase Rate of Resistance (%) |
|---|---|---|
| Example 1 | 86.6 | 16.4 |
| Example 2 | 92.1 | 12.9 |
| Example 3 | 92.3 | 10.5 |
| Example 4 | 96.6 | 6.6 |
| Example 5 | 82.4 | 20.1 |
| Example 6 | 88.5 | 15.6 |
| Example 7 | 89.6 | 14.1 |
| Example 8 | 90.9 | 13.8 |
| Comparative Example 1 | 67.1 | 39.6 |
| Comparative Example 2 | 70.3 | 36.3 |
| Comparative Example 3 | 67.8 | 38.9 |
| Comparative Example 4 | 73.5 | 33.6 |

### Experimental Example 3 - Evaluation of Thermal Stability

An evaluation was conducted on the thermal stability of each of the secondary batteries manufactured in Examples 1 to 8 and Comparative Examples 1 to 4.

For example, each of the lithium secondary batteries prepared in the Examples and the Comparative Examples above was subjected to a formation process, and then, charged to 4.2 V at a rate of 0.33 C (0.05 C cut off) under the constant current-constant voltage condition at 25 °C to be fully charged (SOC 100 %). The fully charged battery was heated up to 140 °C at a rate of 5 °C/min, and then, left for 1 hour, to perform the hot box evaluation experiment for checking whether an ignition occurs. Table 3 below provides the results, in which Pass refers to an evaluation result when no ignition occurs, and Fail refers to an evaluation when an ignition occurs.

**[Table 3]**

| | Hot Box Test Results |
|---|---|
| Example 1 | Pass |
| Example 2 | Pass |
| Example 3 | Pass |
| Example 4 | Pass |
| Example 5 | Pass |
| Example 6 | Pass |
| Example 7 | Pass |
| Example 8 | Pass |
| Comparative Example 1 | Fail |
| Comparative Example 2 | Pass |
| Comparative Example 3 | Fail |
| Comparative Example 4 | Pass |

## Claims

1. A lithium secondary battery comprising:
a negative electrode including a silicon-based negative electrode active material;
a positive electrode;
a separator; and
a non-aqueous electrolyte,
wherein the non-aqueous electrolyte contains a lithium salt; an organic solvent;
a compound of Formula 1 below as a first additive; and a compound of Formula 2 below as a second additive, 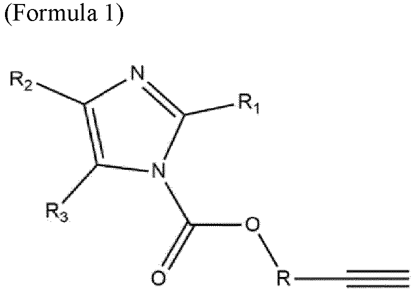 wherein R is an alkylene group with 1 to 5 carbon atoms, which may be substituted with fluorine, and R₁ to R₃ are each independently any one selected from the group consisting of H, an alkyl group with 1 to 5 carbon atoms, and a nitrile group, 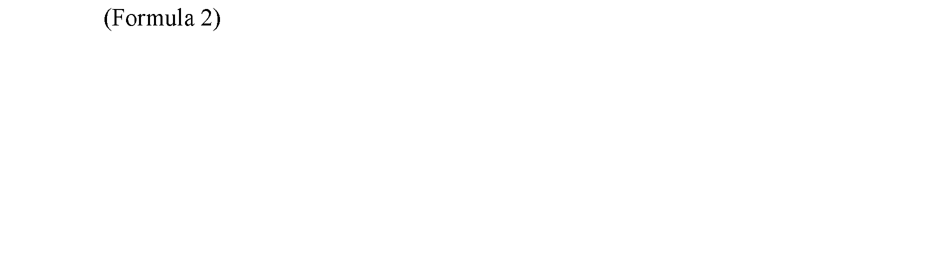 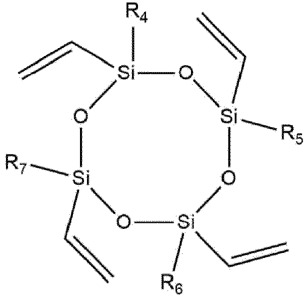 wherein R₄ to R₇ are each independently any one selected from the group consisting of an alkyl group with 1 to 10 carbon atoms, which may be substituted with fluorine, and an alkenyl group with 2 to 10 carbon atoms, which may be substituted with fluorine.

2. The lithium secondary battery according to claim 1, wherein the compound of Formula 1 is any one selected from the group consisting of Formulas 1-1 to 1-3 below.

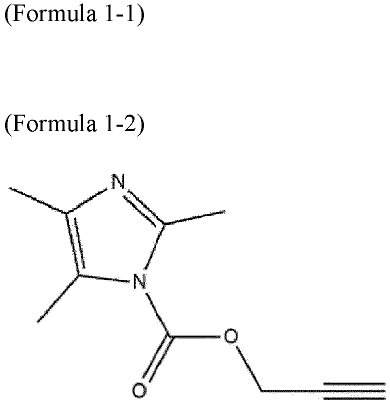

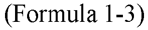

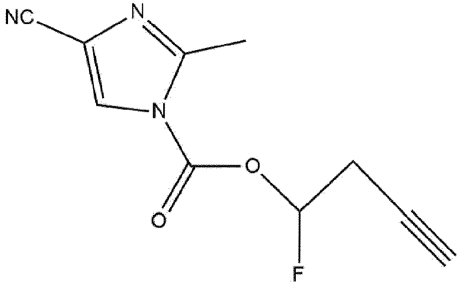

3. The lithium secondary battery according to claim 1, wherein the compound of Formula 2 is any one selected from the group consisting of Formula 2-1 to 2-3 below.

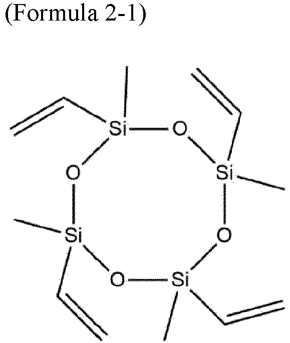

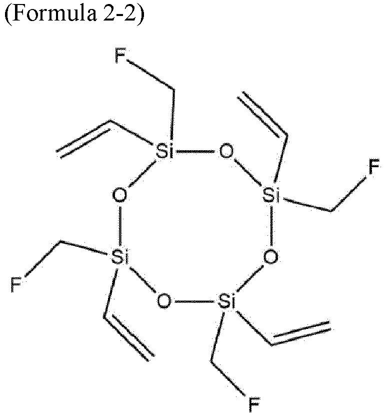

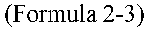

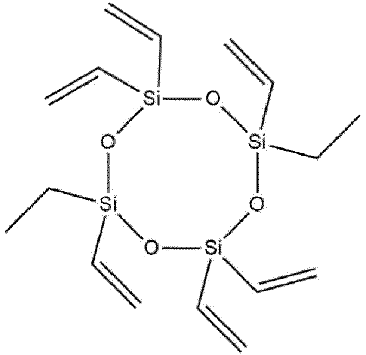

4. The lithium secondary battery according to claim 1, wherein the first additive is contained in a content of 0.01 parts by weight to 10 parts by weight based on 100 parts by weight of the non-aqueous electrolyte.

5. The lithium secondary battery according to claim 1, wherein the second additive is contained in a content of 0.01 parts by weight to 10 parts by weight based on 100 parts by weight of the non-aqueous electrolyte.

6. The lithium secondary battery according to claim 1, wherein the first additive and the second additive are contained in a weight ratio of 1:0.002 to 1:500.

7. The lithium secondary battery according to claim 1, wherein the lithium salt is at least one selected from the group consisting of LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂, LiN(SO₂CF₂CF₃)₂, and LiN(SO₂CF₃)₂.

8. The lithium secondary battery according to claim 1, wherein the lithium salt is contained at a concentration of 0.5 M to 5.0 M.

9. The lithium secondary battery according to claim 1, wherein the organic solvent includes at least one organic solvent selected from the group consisting of a cyclic carbonate-based organic solvent, a linear carbonate-based organic solvent, a linear ester-based organic solvent, and a cyclic ester-based organic solvent.

10. The lithium secondary battery according to claim 1, wherein the silicon-based negative electrode active material includes Si only.

11. The lithium secondary battery according to claim 1, wherein the positive electrode includes a lithium nickel-cobalt-manganese-based oxide as a positive electrode active material.

12. The lithium secondary battery according to claim 11, wherein the lithium nickel-cobalt-manganese-based oxide has a composition represented by Formula 3 below
(Formula 3) LiₓNiₐCo_{b}M¹_{c}M²_{d}O₂
(wherein M¹ is Mn or a combination of Mn and Al, M² is at least one species selected from the group consisting of Zr, W, Y, Ba, Ca, Ti, Mg, Ta, and Nb, 0.90≤x≤1.1, 0.80≤a<1.0, 0<b<0.2, 0<c<0.2, and 0≤d≤0.1).

13. An electronic equipment comprising the lithium secondary battery according to claim 10.
